# EUROPEAN PATENT APPLICATION

(11) **EP 4 679 247 A1**
(43) Date of publication of application: **14.01.2026**
(21) Application number: 24775142.3
(22) Date of filing: 15.03.2024
(51) Int. Cl.: G06F 3/0488, G06F 3/041, G06F 3/0354, G06F 21/31

(54) **ELECTRONIC DEVICE FOR PROCESSING INPUT OF STYLUS PEN, AND OPERATING METHOD THEREOF**

(30) Priority: 20.03.2023 KR 20230035771; 24.05.2023 KR 20230066968
(71) Applicant: Samsung Electronics Co., Ltd., Suwon-si, Gyeonggi-do 16677 (KR)
(72) Inventor: SHIN, Boosun, Suwon-si Gyeonggi-do 16677 (KR); KWON, Jinhee, Suwon-si Gyeonggi-do 16677 (KR); KIM, Jeonghyo, Suwon-si Gyeonggi-do 16677 (KR); KIM, Hyunjung, Suwon-si Gyeonggi-do 16677 (KR); PARK, Junu, Suwon-si Gyeonggi-do 16677 (KR); PARK, Hyungkun, Suwon-si Gyeonggi-do 16677 (KR); LEE, Sookkyung, Suwon-si Gyeonggi-do 16677 (KR); LIM, Eunhae, Suwon-si Gyeonggi-do 16677 (KR); HONG, Kyungwha, Suwon-si Gyeonggi-do 16677 (KR)
(74) Representative: Nederlandsch Octrooibureau
(86) International application number: PCT/KR2024/003310
(87) International publication number: WO 2024/196094

(57) **Abstract**

According to an embodiment, an electronic device includes a communication module, a memory, a display, and at least one processor electrically connected to the communication module, the memory, and the display, wherein the at least one processor may: receive, from a stylus pen through the communication module, identification information related to the stylus pen; in response to a first input of the stylus pen, display an authentication screen for authenticating the stylus pen on the basis of authentication information that corresponds to the identification information and is stored in the memory; receive a second input of the stylus pen through the authentication screen; and on the basis that authentication is satisfied on the basis of the authentication information and the second input, provide content corresponding to the authentication information.

## Description

### [Technical Field]

Embodiments relate to an electronic device that processes an input of a stylus pen and a method for operating the electronic device.

### [Background Art]

Electronic devices are being developed to be able to receive various inputs from the user through a specified input device (e.g., a stylus pen) connected with the electronic device via wireless communication. An electronic device may identify a designated position on an electronic device with a pen input device (which may be referred to herein as a stylus pen for ease of description) and perform its corresponding function.

The electronic device may detect magnetic fields produced from the stylus pen using electro magnetic resonance (hereinafter, referred to as EMR). An electronic device may identify the position of a stylus pen based on an electromotive force generated by a magnetic field per channel.

The stylus pen may be connected with the electronic device via short-range communication (e.g., Bluetooth low energy (BLE)). The stylus pen may transmit information about a pressing state of a button on the housing of the stylus pen to the electronic device via short-range communication, and the electronic device may perform a designated operation based on the received information.

### [Detailed Description of the Invention]

### [Technical Solution]

According to an embodiment, an electronic device may comprise a communication module, memory, a display, and at least one processor electrically connected to the communication module, the memory, and the display.

According to an embodiment, the at least one processor may receive identification information related to a stylus pen from the stylus pen through the communication module.

According to an embodiment, the at least one processor may, in response to a first input of the stylus pen, display an authentication screen for authenticating the stylus pen based on authentication information corresponding to the identification information stored in the memory.

According to an embodiment, the at least one processor may receive a second input of the stylus pen through the authentication screen.

According to an embodiment, the at least one processor may provide content corresponding to the authentication information based on authentication being met based on the authentication information and the second input.

According to an embodiment, a method for controlling an electronic device may comprise receiving identification information related to a stylus pen from the stylus pen.

According to an embodiment, the method for controlling the electronic device may comprise, in response to a first input of the stylus pen, displaying an authentication screen for authenticating the stylus pen based on authentication information corresponding to the identification information stored in memory of the electronic device.

According to an embodiment, the method for controlling the electronic device may comprise receiving a second input of the stylus pen through the authentication screen.

According to an embodiment, the method for controlling the electronic device may comprise providing content corresponding to the authentication information based on authentication being met based on the authentication information and the second input.

According to an embodiment, in a non-transitory, computer-readable storage medium storing one or more programs, the one or more programs may include instructions causing an electronic device including a communication module, memory, a display, and at least one processor to receive identification information related to a stylus pen from the stylus pen through the communication module.

According to an embodiment, the one or more programs may include instructions causing the electronic device to, in response to a first input of the stylus pen, display an authentication screen for authenticating the stylus pen based on authentication information corresponding to the identification information stored in the memory.

According to an embodiment, the one or more programs may include instructions causing the electronic device to receive a second input of the stylus pen through the authentication screen.

According to an embodiment, the one or more programs may include instructions causing the electronic device to provide content corresponding to the authentication information based on authentication being met based on the authentication information and the second input.

### [Brief Description of Drawings]

FIG. 1 is a block diagram illustrating an electronic device in a network environment according to an embodiment;
FIG. 2 is a perspective view illustrating an electronic device including a stylus pen according to an embodiment;
FIG. 3 is a block diagram illustrating a stylus pen according to an embodiment;
FIG. 4 is a block diagram illustrating an electronic device according to an embodiment;
FIG. 5 is a view illustrating an operation of an electronic device based on an input of a plurality of stylus pens according to an embodiment;
FIG. 6 is a flowchart illustrating an operation of an electronic device based on an input of a stylus pen according to an embodiment;
FIG. 7 is a flowchart illustrating an operation of an electronic device based on an input of a stylus pen according to an embodiment;
FIG. 8A is a view illustrating an operation of copying content using a stylus pen in an external display device according to an embodiment;
FIG. 8B is a view illustrating an authentication operation and a content paste operation of an electronic device based on an input of a stylus pen according to an embodiment;
FIG. 9A is a view illustrating an operation of distinguishing and displaying an input by a plurality of stylus pens of an electronic device for each stylus pen according to an embodiment;
FIG. 9B is a view illustrating an operation of distinguishing an input by a plurality of stylus pens of an electronic device into different layers for each stylus pen according to an embodiment;
FIG. 10A is a view illustrating an operation of displaying a common clipboard of an electronic device according to an embodiment;
FIG. 10B is a view illustrating an authentication operation for displaying a clipboard stored in a stylus pen of an electronic device according to an embodiment;
FIG. 10C is a view illustrating a clipboard stored in a stylus pen displayed when authentication is successful through the authentication screen illustrated in FIG. 10B;
FIG. 11A is a view illustrating a plurality of pieces of authentication information stored in a stylus pen according to an embodiment;
FIG. 11B is a view illustrating an operation of displaying a first content corresponding to first authentication information from among a plurality of pieces of authentication information stored in a stylus pen, of an electronic device according to an embodiment; and
FIG. 11C is a view illustrating an operation of displaying a second content corresponding to second authentication information from among a plurality of pieces of authentication information stored in a stylus pen, of an electronic device according to an embodiment.

### [Mode for Carrying out the Invention]

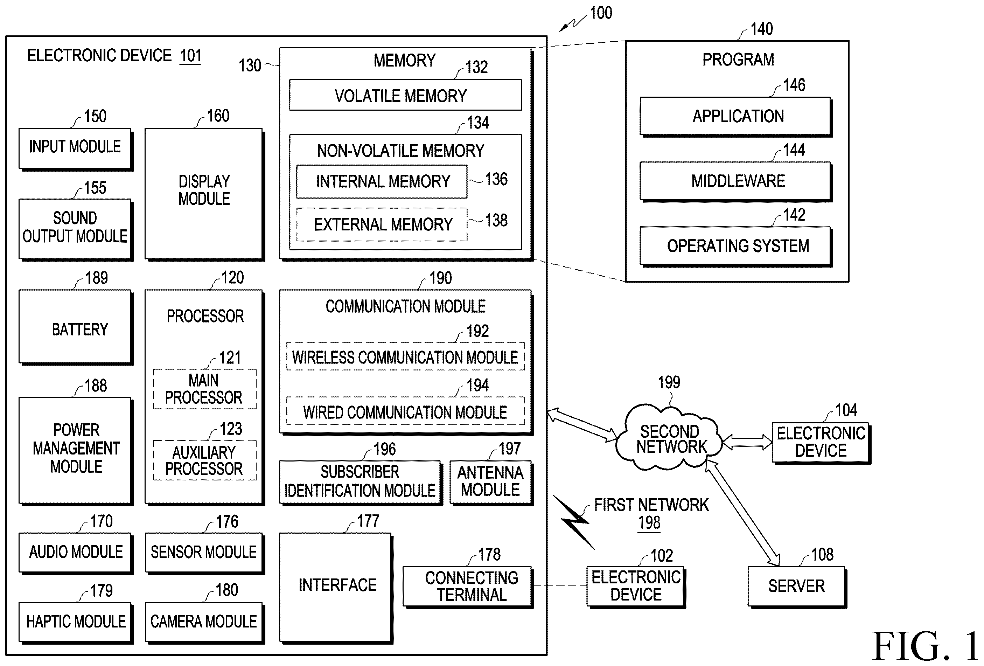

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

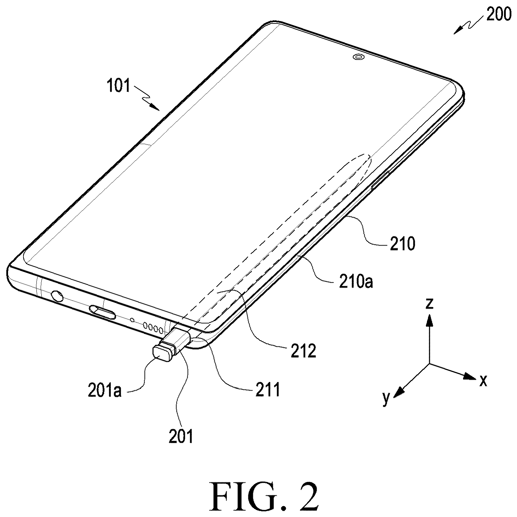

FIG. 2 is a perspective view 200 illustrating an electronic device 101 including a stylus pen 201 (e.g., the electronic device 102 of FIG. 1) according to various embodiments. According to an embodiment, the stylus pen 201 may correspond to the input module 150 of FIG. 1 but rather than the electronic device 102 of FIG. 1.

Referring to FIG. 2, according to an embodiment, the electronic device 101 may include the configuration shown in FIG. 1 and may have a structure where the stylus pen 201 may be inserted. The electronic device 101 may include a housing 210, and a hole 211 may be formed in a portion of the housing 210, e.g., a portion of a side surface 210a. The electronic device 101 may include a first inner space 212 which is a storage space connected with the hole 211, and the stylus pen 201 may be inserted into the first inner space 212. In the embodiment shown, the stylus pen 201 may have a pressable first button 201a at an end thereof to be easily pulled out of the first inner space 212 of the electronic device 101. When the first button 201a is pressed, a repulsive mechanism (e.g., at least one elastic member, e.g., a spring) configured in association with the first button 201a may be operated to allow the stylus pen 201 to be removed from the first inner space 212.

According to an embodiment, the electronic device 101 may include a structure in which the stylus pen 201 may be attached to the electronic device 101. For example, the electronic device 101 may include at least one magnetic material in a position adjacent to the attachment area so that the stylus pen 201 may be attached to the outside of the housing 210. The stylus pen 201 may be attached to the outside of the housing 210 of the electronic device 101 through at least one magnetic material.

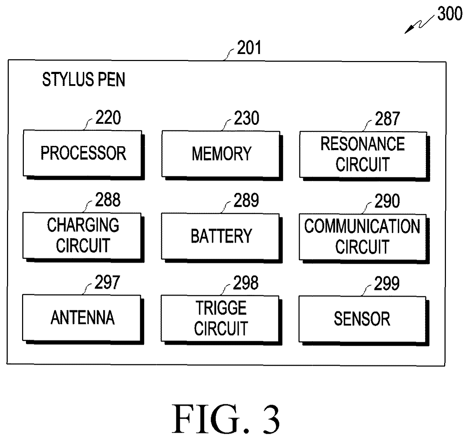

FIG. 3 is a block diagram 300 illustrating a stylus pen (e.g., the stylus pen 201) according to an embodiment.

Referring to FIG. 3A, according to an embodiment, the stylus pen 201 may include a processor 220, memory 230, a resonance circuit 287, a charging circuit 288, a battery 289, a communication circuit 290, an antenna 297, a trigger circuit 298, and/or a sensor 299. According to an embodiment, the processor 220, at least part of the resonance circuit 287, and/or at least part of the communication circuit 290 of the stylus pen 201 may be configured in the form of a chip or on a printed circuit board. The processor 220, the resonance circuit 287, and/or the communication circuit 290 may be electrically connected with the memory 230, the charging circuit 288, the battery 289, the antenna 297, the trigger circuit 298, and/or the sensor 299.

According to an embodiment, the processor 220 may include a customized hardware module or a generic processor configured to execute software (e.g., an application program). The processor 220 may include a hardware component (function) or software element (program) including at least one of a communication module or a module to manage the state or environment of the stylus pen 201, an input/output interface, a data measuring module, and various sensors provided in the stylus pen 201. The processor 220 may include, e.g., a hardware module, a software module, a firmware module, or a combination of two or more thereof. According to an embodiment, the processor 220 may be configured to transmit, through the communication circuit 290 to the electronic device 101, information indicating a pressing state of a button (e.g., the button 337), sensing information obtained by the sensor 299, and/or information (e.g., information associated with the position of the stylus pen 201) calculated based on the sensing information.

According to an embodiment, the resonance circuit 287 may resonate based on an electromagnetic field signal generated from a digitizer (e.g., the display module 160) of the electronic device 101 and may radiate an electromagnetic resonance (EMR) input signal (or magnetic field) by the resonance. The electronic device 101 may identify the position of the stylus pen 201 over the electronic device 101 using the EMR input signal. For example, the electronic device 101 may identify the position of the stylus pen 201 based on the magnitude of the electromotive force (e.g., output current) generated by the EMR input signal at each of a plurality of channels (e.g., a plurality of loop coils) in the digitizer. Although the electronic device 101 and the stylus pen 201 are described as operated based on the EMR scheme, this is merely an example. For example, the electronic device 101 may generate an electrical field-based signal based on an electrically coupled resonance (ECR) scheme. The resonance circuit of the stylus pen 201 may be resonated by the electric field. The electronic device 101 may identify the electric potential at the plurality of channels (e.g., electrodes) by the resonance of the stylus pen 201 and may identify the position of the stylus pen 201 based on the electric potential. The stylus pen 201 may be implemented in an active electrostatic (AES) scheme, and it will be easily appreciated by one of ordinary skill in the art that it is not limited to a specific kind of implementation. Further, the electronic device 101 may detect the stylus pen 201 based on a variation in capacitance (self-capacitance or mutual-capacitance) associated with at least one electrode of the touch panel. In this case, the stylus pen 201 may not include the resonance circuit. In the disclosure, "panel" or "sensing panel" may be used as a term collectively referring to a digitizer and touch screen panel (TSP).

According to an embodiment, the memory 230 may store information related to the operation of the stylus pen 201. For example, the information may include information for communicating with the electronic device 101 and frequency information related to the input operation of the stylus pen 201. The memory 230 may store a program (or application, algorithm, or processing loop) for calculating information (e.g., coordinate information and/or displacement information) about the position of the stylus pen 201 from the sensing data obtained by the sensor 299. The memory 230 may store the communication stack of the communication circuit 290. According to an implementation, the communication circuit 290 and/or processor 220 may include a dedicated memory.

According to an embodiment, the resonance circuit 287 may include a coil (or inductor) and/or capacitor. The resonance circuit 287 may be resonated based on an input electric field and/or magnetic field (e.g., an electric field and/or magnetic field generated from the digitizer of the electronic device 101). When the stylus pen 201 transmits signals via the EMR scheme, the stylus pen 201 may generate a signal having a resonance frequency based on an electromagnetic field generated from the inductive panel of the electronic device 101. When the stylus pen 201 transmits signals via the AES scheme, the stylus pen 201 may generate a signal using a capacitive coupling with the electronic device 101. When the stylus pen 201 transmits signals via the ECR scheme, the stylus pen 201 may generate a signal having a resonance frequency based on an electric field generated from a capacitive device of the electronic device. According to an embodiment, the resonance circuit 287 may be used to vary the frequency or strength of electromagnetic field according to the user's manipulation state. For example, the resonance circuit 287 may provide various frequencies to recognize a hovering input, drawing input, button input, or erasing input. For example, the resonance circuit 287 may provide various resonance frequencies according to combinations of connections of a plurality of capacitors or based on a variable inductor and/or variable capacitor.

According to an embodiment, when connected with the resonance circuit 287 based on a switching circuit, the charging circuit 288 may rectify a resonance signal generated from the resonance circuit 287 into a direct current (DC) signal and provide the DC signal to the battery 289. According to an embodiment, the stylus pen 201 may identify whether the stylus pen 201 is inserted into the electronic device 101 using a voltage level of a DC signal sensed by the charging circuit 288. Or, the stylus pen 201 may identify the pattern corresponding to the signal identified by the charging circuit 288, thereby identifying whether the stylus pen 201 has been inserted.

According to an embodiment, the battery 289 may be configured to store power required to operate the stylus pen 201. The battery 289 may include, e.g., a lithium-ion battery or a capacitor and may be recharged or replaced. According to an embodiment, the battery 289 may be charged with power (e.g., DC signal (DC power)) received from the charging circuit 288.

According to an embodiment, the communication circuit 290 may be configured to perform wireless communication between the stylus pen 201 and the communication module 190 of the electronic device 101. According to an embodiment, the communication circuit 290 may transmit state information about the stylus pen 201, input information, and/or position-related information to the electronic device 101 using a short-range communication scheme. For example, the communication circuit 290 may transmit direction information (e.g., motion sensor data) about the stylus pen 201 obtained through the trigger circuit 298, voice information entered through the microphone, or remaining power information about the battery 289 to the electronic device 101. For example, the communication circuit 290 may transmit the sensing data obtained from the sensor 299 and/or information associated with the position of the stylus pen 201, identified based on the sensing data, to the electronic device 101. For example, the communication circuit 290 may transmit information about the state of a button (e.g., the button 337) of the stylus pen 201 to the electronic device 101. As an example, the short-range communication scheme may include, but is not limited in kind to, Bluetooth, Bluetooth low energy (BLE), near-field communication (NFC), or wireless-fidelity (Wi-Fi) direct.

According to an embodiment, the antenna 297 may be used to transmit signals or power to the outside (e.g., the electronic device 101) or receive signals or power from the outside. According to an embodiment, the stylus pen 201 may include a plurality of antennas 297 and select at least one antenna 297 appropriate for the communication scheme from among the plurality of antennas. The communication circuit 290 may exchange signals or power with an external electronic device through the at least one selected antenna 297.

According to an embodiment, the trigger circuit 298 may include at least one button or sensor circuit. According to an embodiment, the processor 220 may identify the input scheme (e.g., touch or press) or kind (e.g., EMR button or BLE button) of the button of the stylus pen 201. According to an embodiment, the trigger circuit 298 may transmit a trigger signal to the electronic device 101 using a signal through a sensor 299 or a button input signal.

According to an embodiment, the sensor 299 may include an accelerometer, a gyro sensor, and/or a geomagnetic sensor. The accelerometer may sense linear movement of the stylus pen 201 and/or information about the acceleration on the three axes, six axes, and/or nine axes of the stylus pen 201. The gyro sensor may sense information related to the rotation of the stylus pen 201. The geomagnetic sensor may sense information about the direction of the stylus pen 201 in an absolute coordinate system. According to an embodiment, the sensor 299 may include a sensor capable of generating an electric signal or data value corresponding to the internal operation status or external environment of the stylus pen 201, such as, e.g., a remaining battery capacity sensor, pressure sensor, optical sensor, temperature sensor, or biometric sensor, as well as the sensor for measuring the movement. According to an embodiment, the processor 220 may transmit the information obtained from the sensor 299 through the communication circuit 290 to the electronic device 101. The processor 220 may transmit information (e.g., the coordinates of the stylus pen 201 and/or the displacement of the stylus pen 201) associated with the position of the stylus pen 201 based on the information obtained from the sensor 299 through the communication circuit 290 to the electronic device 101.

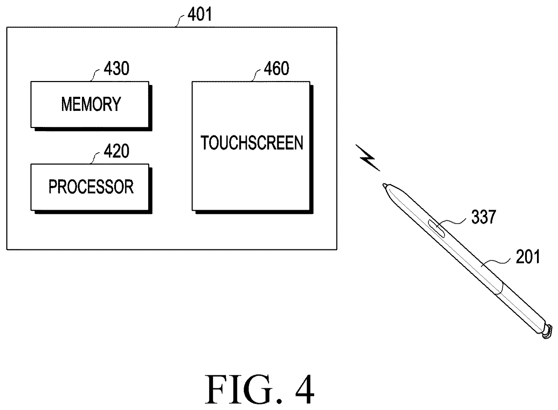

FIG. 4 is a block diagram illustrating an electronic device according to an embodiment.

Referring to FIG. 4, an electronic device 401 may include a processor 420, memory 430, and a touchscreen 460. For example, the electronic device 401 may be implemented to be identical or similar to the electronic device 101 of FIG. 1.

According to an embodiment, the processor 420 may control the overall operation of the electronic device 401. For example, the processor 420 may be implemented to be the same as or similar to the processor 120 of FIG. 1.

According to an embodiment, the processor 420 may identify a touch input generated by the stylus pen 201 or the user's hand through the touchscreen 460 (e.g., the display module 160 of FIG. 1). Alternatively, the processor 420 may identify an input generated by an input means, such as a mouse or a trackball, through the touchscreen 460 (e.g., the display module 160 of FIG. 1). The processor 420 may identify the start and completion of the touch input (or the input generated by the input means). For example, when a touchdown by the stylus pen 201 or the user's hand is identified on the touchscreen 460, the processor 420 may identify that a touch input has started. Thereafter, when the touch-up by the stylus pen 201 or the user's hand is identified on the touchscreen 460, the processor 420 may identify that the touch input has been completed.

According to an embodiment, the processor 420 may identify the movement path of the touch input from the start of the touch start to the completion of the touch. Further, the processor 420 may identify the movement distance of the touch input from the start of the touch to the completion of the touch.

According to an embodiment, the processor 420 may identify whether the gesture indicated by the touch input (or the input generated by the input means) meets a preset gesture generation condition. For example, the processor 420 may identify the gesture indicated by the touch input based on the start, movement path, and completion of the touch input among a plurality of predesignated gestures. The processor 420 may identify whether the gesture indicated by the touch input meets a gesture generation condition for generating a specific gesture among the plurality of gestures supported by the electronic device 401 based on the touch start, touch move, and/or touch completion. For example, the plurality of gestures may include a single tap, a multi-tap, a hold, a long press, a move and hold, a scroll input, a fling input, movement of two touches in different directions, and/or rotation of two touches in different directions. For example, a different gesture generation condition may be set for each of the plurality of gestures.

According to an embodiment, if the gesture indicated by the touch input fails to meet the gesture generation condition for generating the specific gesture, the processor 420 may display the handwriting (or drawing) indicated by the touch input on the touchscreen 460. For example, if the touch input does not indicate a predesignated gesture, the processor 420 may display the handwriting (or drawing) inputted by the touch input on the touchscreen 460.

According to an embodiment, if the gesture indicated by the touch input meets the gesture generation condition for generating the specific gesture, the processor 420 may identify whether the touch input meets at least one of a time condition, distance condition, and space condition designated for the gesture, using the touch start point of the touch input or the end point of the prior touch input, as a reference point. In other words, although the gesture indicated by the touch input meets the gesture generation condition, the processor 420 may not immediately execute the function corresponding to the specific gesture. For example, the time condition may mean a condition for the time when the touch input is made. The distance condition may mean a condition for the length of the path of the touch input. The space condition may mean a condition for whether the touch input is positioned within or outside a specific space.

According to an embodiment, the reference point for determining the time condition, distance condition, and space condition designated for the gesture may differ per gesture. For example, the reference point may be the touch start point or the end point of the prior touch input. Or, the start point or end point of the oldest touch input among recent touches made within 500ms, the point to which the touch input is first moved out of a preset area, the start point or end point of the oldest touch input among 10 recently identified touch inputs, the touch input (e.g., the touch input whose x coordinate is 1000 or more) corresponding to the data value meeting a specific condition among the data of touch inputs, or the start point or end point of the touch input selected by a specific algorithm may be set as the reference point. For example, the reference point may be set automatically by the processor 420 or by the user.

According to an embodiment, the processor 420 may determine whether to execute the function corresponding to the gesture indicated by the touch input based on whether the touch input meets at least one condition designated for the specific gesture among the time condition, distance condition, and space condition. For example, if the touch input meets the time condition, distance condition, and/or space condition designated for the corresponding gesture, the processor 420 may execute the function corresponding to the gesture indicated by the touch input. Or, if the touch input does not meet the time condition, distance condition, and/or space condition designated for the corresponding gesture, the processor 420 may not execute the function corresponding to the gesture indicated by the touch input. In this case, the processor 420 may display the movement (e.g., handwriting or drawing) indicated by the touch input on the touchscreen 460.

According to an embodiment, the processor 420 may determine whether to execute the function corresponding to the gesture indicated by a plurality of touch inputs based on whether the plurality of touch inputs meet at least one condition designated for the specific gesture among the time condition, distance condition, and/or space condition.

According to an embodiment, each of the plurality of gestures may differ in at least some of the time condition, distance condition, and/or space condition which differ from each other. Further, the processor 420 may execute the function corresponding to the gesture if only some of the time condition, distance condition, and/or space condition are met for some gestures among the plurality of gestures.

According to an embodiment, the memory 430 may store information about the gesture generation condition for each of the plurality of gestures. Further, the memory 430 may store information about the time condition, length condition, and/or space condition for each of the plurality of gestures. For example, the memory 430 may be implemented to be substantially the same or similar to the memory 130 of FIG. 1.

Although it is described below that the electronic device 401 performs the following operations for convenience of description, at least some of the operations performed by the electronic device 401 may be controlled by the processor 420.

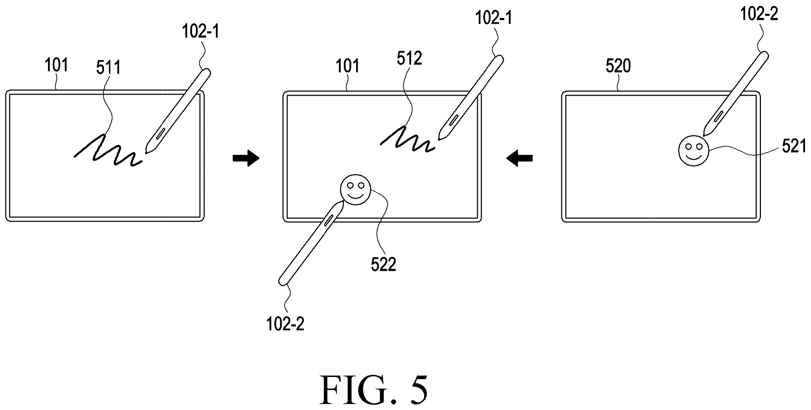

FIG. 5 is a view illustrating an operation of an electronic device based on an input of a plurality of stylus pens according to an embodiment.

Referring to FIG. 5, the electronic device 101 (e.g., the electronic device 101 of FIG. 1 or the processor 120 of FIG. 1) may communicate with a plurality of stylus pens 102-1 and 102-2 (e.g., the electronic device 102 of FIG. 1, the stylus pen 201 of FIG. 2, and the stylus pen 201 of FIG. 3).

According to an embodiment, the electronic device 101 may receive identification information from each of the plurality of stylus pens 102-1 and 102-2.

According to an embodiment, when identifying that authentication is set after receiving identification information from the stylus pens 102-1 and 102-2, the electronic device 101 may perform authentication through an authentication screen.

According to an embodiment, the electronic device 101 may distinguish the plurality of stylus pens 102-1 and 102-2 based on the received identification information and/or authentication information. According to an embodiment, the electronic device 101 may set different input signal frequencies to the plurality of stylus pens 102-1 and 102-2 and distinguish the respective inputs of the plurality of stylus pens 102-1 and 102-2. For example, the electronic device 101 may set the frequency recognition range of the first stylus pen 102-1 to a first range in a sensing range capable of recognizing the stylus pen, and set the frequency recognition range of the second stylus pen 102-2 to a second range different from the first range in the sensing range capable of recognizing the stylus pen.

According to an embodiment, the plurality of stylus pens 102-1 and 102-2 may adjust the frequency of the radiated signal to be included in the first range or the second range respectively corresponding to the plurality of stylus pens 102-1 and 102-2, or adjust the variable capacitance provided inside the stylus pen to correspond to the frequency recognition range.

According to an embodiment, the electronic device 101 may provide the first content 512 based on an input received from the first stylus pen 102-1. For example, the input received from the first stylus pen 102-1 may be a paste command. According to an embodiment, the first content 512 displayed on the electronic device 101 by the paste command of the first stylus pen 102-1 may be content copied by the input of the first stylus pen 102-1 on a first external electronic device 510 (hereinafter, referred to as a first external display device) before the first stylus pen 102-1 communicates with the electronic device 101. For example, the content 511 may include images, text, and/or drawings. According to an embodiment, the first external display device 510 may not communicate with the electronic device 101.

According to an embodiment, the electronic device 101 may provide second content 522 based on an input received from the second stylus pen 102-2. For example, the input received from the second stylus pen 102-2 may be a paste command. According to an embodiment, the second content 522 displayed on the electronic device 101 by the paste command of the second stylus pen 102-2 may be content copied by the input of the second stylus pen 102-2 on the second external electronic device 520 (hereinafter, referred to as a second external display device) before the second stylus pen 102-2 communicates with the electronic device 101. For example, the content 521 may include images, text, and/or drawings. According to an embodiment, the second external display device 520 may not communicate with the electronic device 101. According to an embodiment, the drawing may include coordinate information about a drawing input from the external electronic device 510, 520 (hereinafter, referred to as an external display device).

According to an embodiment, the copied content 511, 521 may be stored in the stylus pen 102-1, 102-2, stored in the memory of the external display device 510, 520, or stored in a server communicating with the stylus pen 102-1, 102-2.

According to an embodiment, if a paste command is received from the stylus pen 102-1, 102-2, the electronic device 101 may receive copied content 511, 521 stored in the memory of the stylus pen 102-1, 102-2 from the stylus pen 102-1, 102-2, or may receive copied content 511, 521 from a server communicating with the stylus pen 102-1, 102-2, and display the received content 512, 522.

According to an embodiment, when the electronic device 101 and the external display device 510, 520 may communicate with each other, if a paste command is received from the stylus pen 102-1, 102-2, the electronic device 101 may receive the copied content 511, 521 stored in the memory of the external display device 510, 520 from the external display device 510, 520 and display the received content 512, 522.

According to an embodiment, the content (e.g., images, text, and/or drawing coordinates) copied by an input of the stylus pen 102-1, 102-2 in the electronic device 101 may be pasted into the external display device 510, 520 by an input of the stylus pen 102-1, 102-2 on the external display device 510, 520.

According to an embodiment, the input received by the electronic device 101 from the stylus pen 102-1, 102-2 may include a clipboard display command and/or a handwritten input. For example, the electronic device 101 may provide a clipboard corresponding to the identification information about the first stylus pen 102-1 as the first content 512 based on receiving a clipboard display command from the first stylus pen 102-1. According to an embodiment, the electronic device 101 may provide a handwriting display of the first stylus pen 102-1 to the first content 512 based on receiving a handwriting input from the first stylus pen 102-1.

According to an embodiment, the electronic device 101 may display the content 512, 522 for each of the stylus pen 102-1, 102-2 based on the identification information received from the stylus pen 102-1, 102-2. For example, the electronic device 101 may display differently the highlight color, pen color, pen thickness, and/or pen type (e.g., pencil, colored pencil, fountain pen, highlighter, and/or brush) of the content 512 displayed by the input of the first stylus pen 102-1 and the content 522 displayed by the second stylus pen 102-2.

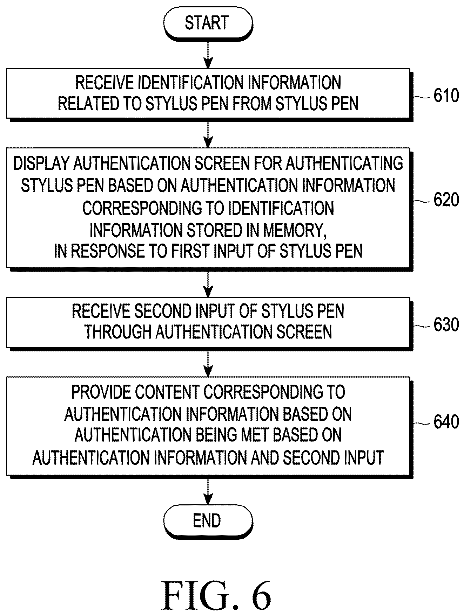

FIG. 6 is a flowchart illustrating an operation of an electronic device based on an input of a stylus pen according to an embodiment.

Referring to FIG. 6, in operation 610, an electronic device (e.g., the electronic device 101 of FIG. 1 or the processor 120 of FIG. 1) may receive identification information related to the stylus pen from the stylus pen (e.g., the electronic device 102 in FIG. 1, the stylus pen 201 of FIG. 2, and the stylus pen 201 of FIG. 3). For example, the electronic device may receive identification information about the stylus pen from the stylus pen through a communication module (e.g., the communication module 190 of FIG. 1).

According to an embodiment, the identification information may be unique ID information (e.g., MAC address) capable of identifying the stylus pen.

According to an embodiment, when the stylus pen approaches the display (e.g., the display module 160 of FIG. 1) of the electronic device, when an input of pressing a button is received near the display of the electronic device, or when the stylus pen touches the display of the electronic device, the stylus pen may transmit the identification information about the stylus pen to the electronic device, and the electronic device may receive the identification information transmitted from the stylus pen.

According to an embodiment, in operation 620, the electronic device may display an authentication screen for authenticating the stylus pen based on authentication information corresponding to identification information stored in the memory (e.g., the memory 130 of FIG. 1) in response to the first input of the stylus pen.

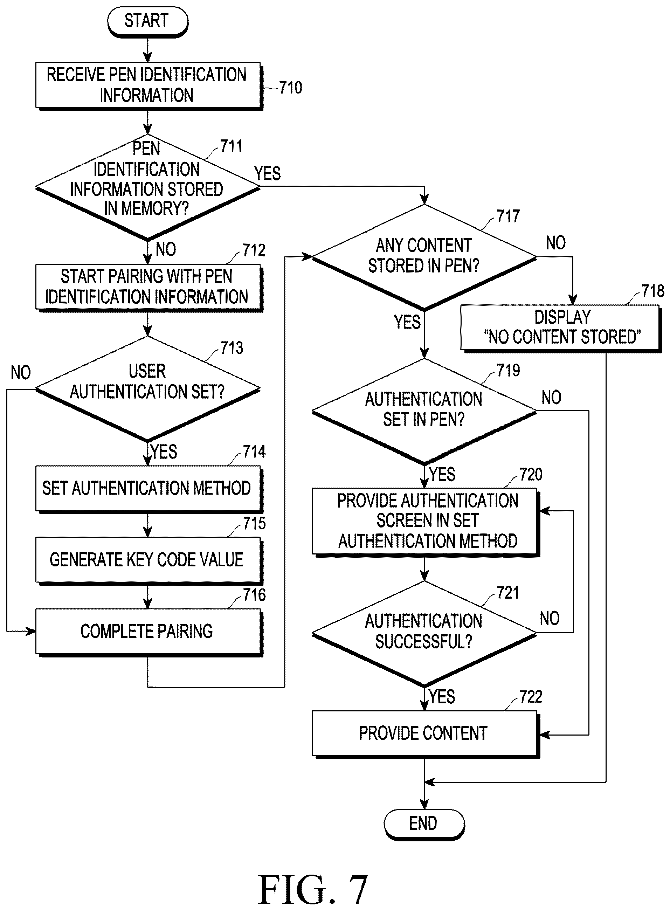

According to an embodiment, if the electronic device receives identification information from the stylus pen, the electronic device may identify whether the identification information is stored in the memory. According to an embodiment, when the received identification information is not stored in the memory, the electronic device may register information about the stylus pen by performing pairing with the stylus pen. According to an embodiment, the operation of performing pairing is described below with reference to FIG. 7.

According to an embodiment, when the received identification information is stored in the memory, the electronic device may identify authentication information (e.g., a key code, an authentication key) corresponding to the stored identification information. According to an embodiment, the authentication information may be set when initially connected to the stylus pen through the communication module, mapped to identification information and stored in the memory. For example, the authentication information may be a pattern, fingerprint recognition, iris recognition, face recognition, and/or password method.

According to an embodiment, the setting and/or releasing of the authentication information may be performed using the memory of the stylus pen. According to an embodiment, the setting and/or releasing of the authentication information may be performed using the memory of the electronic device or a server.

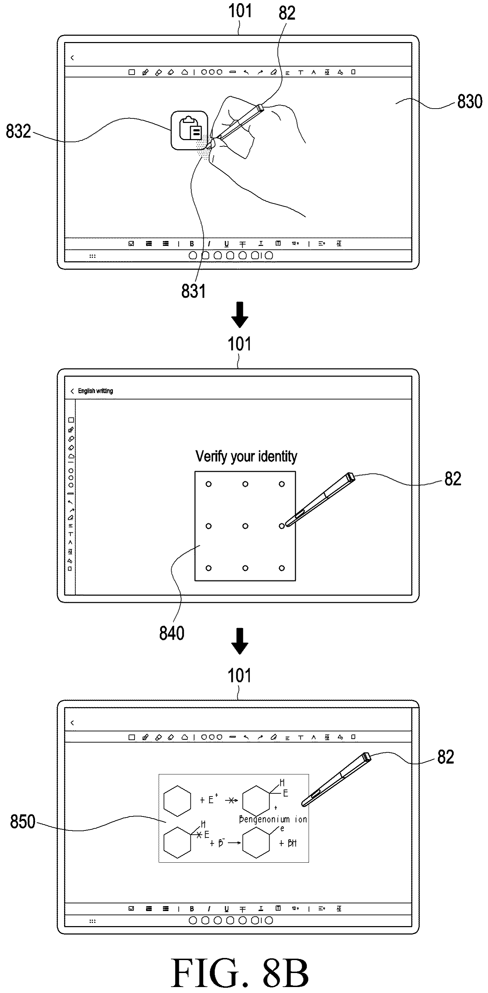

According to an embodiment, if the authentication information is identified, the electronic device may display an authentication screen corresponding to the method of the authentication information. According to an embodiment, an example of the authentication screen is described below with reference to FIGS. 8B, 10B, 11B, and 11C.

According to an embodiment, in operation 630, the electronic device may receive a second input of the stylus pen through the authentication screen.

According to an embodiment, the electronic device may receive the second input of the stylus pen related to a key code through the authentication screen. For example, the electronic device may receive a pattern input and/or a password input of the stylus pen.

According to an embodiment, operation 630 may be omitted according to the authentication method. For example, if the authentication method corresponding to the identification information about the stylus pen is fingerprint recognition, iris recognition, and/or face recognition, the electronic device may receive the user input (e.g., fingerprint input, iris scan, and/or face scan) corresponding to the authentication method instead of the second input of the stylus pen.

According to an embodiment, in operation 640, the electronic device may provide content corresponding to the authentication information based on the authentication being met based on the authentication information and the second input.

According to an embodiment, the content corresponding to the authentication information may be content copied from the external display device by an input of the stylus pen.

According to an embodiment, the electronic device may display the authentication screen in response to a first input of the stylus pen for pasting content copied from the external display device onto the display of the electronic device.

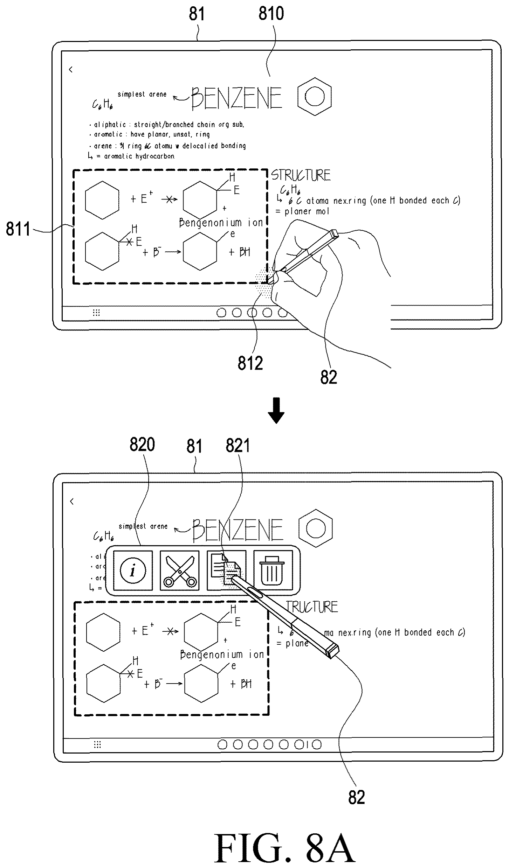

According to an embodiment, an operation of pasting the content copied by the stylus pen in the external display device to the electronic device is described below in more detail with reference to FIGS. 8A and 8B.

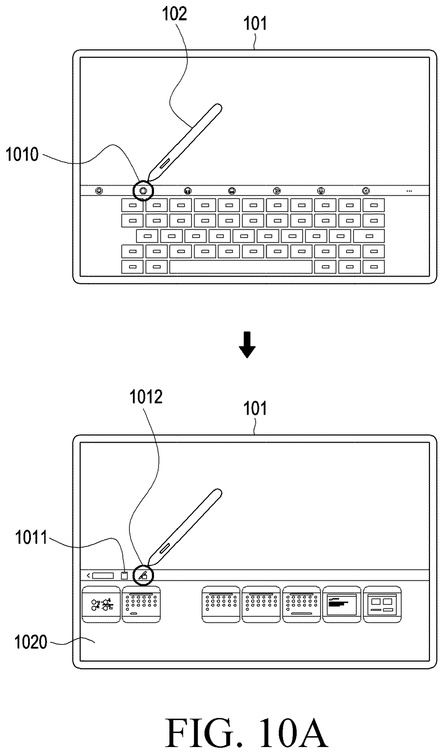

According to an embodiment, the content corresponding to the authentication information may include a clipboard corresponding to the authentication information. According to an embodiment, an operation of displaying the clipboard corresponding to the authentication information based on the authentication being met is described below with reference to FIGS. 10A to 10C.

According to an embodiment, the electronic device may maintain a pen setting value including the pen color, pen thickness, and/or pen type of the stylus pen set in the external display device based on the identification information and/or authentication information. For example, the electronic device may maintain the setting value of the stylus pen set in the external display device based on the identification information about the stylus pen. According to an embodiment, the electronic device may maintain the setting value of the stylus pen set in the external display device based on authentication information about the stylus pen. According to an embodiment, the electronic device may maintain the setting value of the stylus pen set in the external display device based on the identification information and authentication information about the stylus pen.

According to an embodiment, if the stylus pen is connected to the external display device after the pen setting value of the stylus pen is changed in the electronic device, the changed pen setting value may be maintained based on the setting or the user input, or the previous pen setting value in the external display device may be maintained.

According to an embodiment, when there is no authentication information corresponding to the identification information, the electronic device may provide content

(e.g., copied content, clipboard) corresponding to the identification information without an authentication process.

According to an embodiment, the electronic device may store content related to the third input received by the stylus pen after authentication is met in association with authentication information.

According to an embodiment, when there is no authentication information corresponding to the identification information, the electronic device may store the identification information and/or content related to the third input received by the stylus pen after receiving the identification information in association with the identification information and/or the electronic device.

According to an embodiment, the electronic device may store the content related to the third input received through the display of the electronic device by the stylus pen after authentication is not met based on authentication of the authentication information corresponding to the identification information being not met, in association with the electronic device. For example, if authentication is not met because it does not match the pre-stored authentication information, the electronic device may store the content by the stylus pen in association with the electronic device regardless of the identification information about the stylus pen.

According to an embodiment, a plurality of pieces of authentication information may correspond to the identification information. For example, the plurality of pieces of authentication information by a plurality of users for the same stylus pen may be stored in the electronic device.

According to an embodiment, the electronic device may provide first content corresponding to the first authentication information based on authentication for the first authentication information among the plurality of pieces of authentication information included in the identification information being met based on the second input.

For example, if authentication of the first authentication information out of the first authentication information and the second authentication information included in the identification information is met based on the second input entered through the authentication screen, the electronic device may provide the first content out of the first content corresponding to the first authentication information and the second content corresponding to the second authentication information.

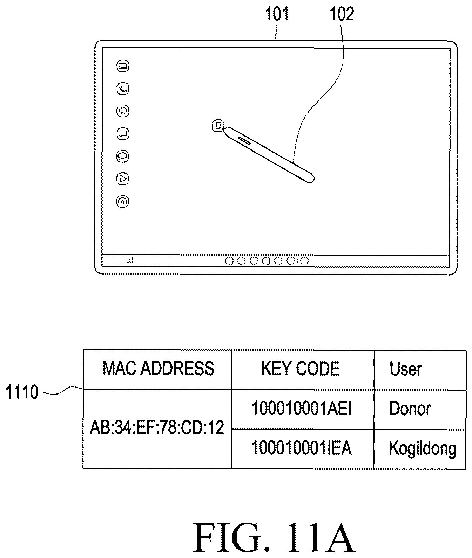

According to an embodiment, an embodiment in which a plurality of authentication information correspond to the same stylus pen is described below in more detail with reference to FIGS. 11A to 11C.

According to an embodiment, the electronic device may receive an input from each of the plurality of stylus pens through the display based on communication with the plurality of stylus pens through the communication module.

According to an embodiment, the electronic device may distinguish and display an input received from each of the plurality of stylus pens for each stylus pen based on identification information about each of the plurality of stylus pens. For example, the electronic device may distinguish and display a pen setting value including a different pen color, pen thickness, and/or pen type for each of the plurality of stylus pens. For example, the pen setting value of each of the plurality of stylus pens may be set in the external display device connected before connection to the electronic device. According to an embodiment, the pen setting value of each of the plurality of stylus pens may be set based on the setting priority stored in the electronic device or may be set by the user input.

According to an embodiment, the electronic device may generate an input received from each of the plurality of stylus pens as layers distinguished for each stylus pen based on identification information about each of the plurality of stylus pens.

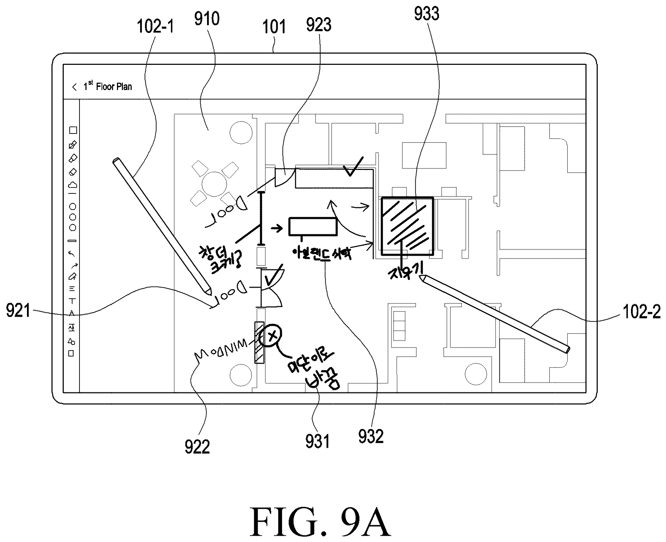

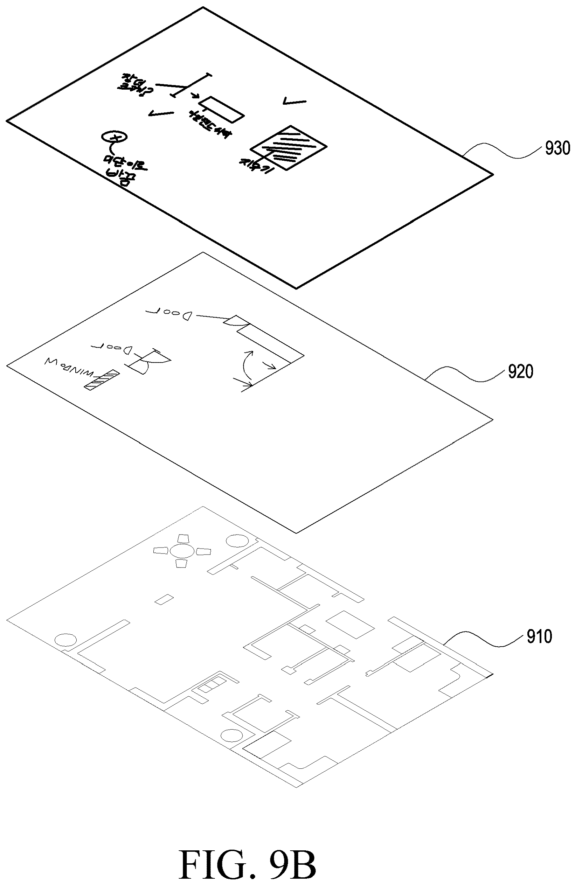

According to an embodiment, an operation in which the electronic device and the plurality of stylus pens communicate with each other is described below in more detail with reference to FIGS. 9A and 9B.

As such, when a plurality of users use their respective stylus pens, the ID of each stylus pen may be identified to distinguish the input content for each stylus pen. Further, it is possible to manage the stored content for each stylus pen, making collaboration easier.

FIG. 7 is a flowchart illustrating an operation of an electronic device based on an input of a stylus pen according to an embodiment.

Referring to FIG. 7, in operation 710, the electronic device (e.g., the electronic device 101 of FIG. 1 or the processor 120 of FIG. 1) may receive identification information about a pen (e.g., the stylus pen or an electronic pen) (e.g., the electronic device 102 of FIG. 1, the stylus pen 201 of FIG. 2, and the stylus pen 201 of FIG. 3).

According to an embodiment, operation 710 is the same as operation 610 of FIG. 6, and redundant descriptions are omitted.

According to an embodiment, in operation 711, the electronic device may identify whether the identification information about the pen is stored in the memory (e.g., the memory 130 of FIG. 1). For example, the electronic device may identify whether the pen that has transmitted the identification information is paired.

According to an embodiment, if the identification information about the pen is not stored in the memory (operation 711-No), in operation 712, the electronic device may start pairing with the identification information about the pen. For example, when the electronic device and the pen are first connected, the electronic device may start pairing with the identification information about the pen.

According to an embodiment, in operation 713, the electronic device may determine whether to set user authentication. According to an embodiment, the electronic device may receive the user input for identifying whether to perform authentication when connecting with the pen.

According to an embodiment, if it is identified that user authentication is set (operation 713-Yes), in operation 714, the electronic device may set an authentication method. For example, the authentication method may include pattern, iris recognition, fingerprint recognition, face recognition, and/or password.

According to an embodiment, if the user input for setting to perform authentication when the electronic device and the pen are connected is received, a screen for selecting an authentication method may be displayed, and the user input for selecting an authentication method may be received.

According to an embodiment, in operation 715, the electronic device may generate a key code value (or authentication information).

According to an embodiment, the electronic device may generate a key code value based on the user input corresponding to the authentication method. For example, the electronic device may generate a key code value based on a pattern input, fingerprint input, iris scan, face scan, and/or password input according to the authentication method.

According to an embodiment, when fingerprint information, iris information, and/or face information are pre-stored in the memory of the electronic device, the electronic device may generate a key code value using the stored information.

According to an embodiment, in operation 716, the electronic device may complete pairing with the pen. According to an embodiment, the electronic device may map the key code value (or authentication information) with the identification information about the stylus pen, store the same in the memory, and complete pairing.

According to an embodiment, if it is identified that user authentication is not set (operation 713-No), the electronic device may proceed to operation 716 to complete pairing with the pen. For example, as it is identified that user authentication is not set, the electronic device may store only the identification information in the memory and complete pairing.

According to an embodiment, in operation 717, the electronic device may identify whether there is content stored in the pen. For example, the electronic device may identify whether there is content (e.g., content copied from the external display device, such as image, text, drawing coordinates) stored in the pen's memory (e.g., the memory 230 of FIG. 3).

According to an embodiment, the electronic device may identify whether content (e.g., a clipboard) corresponding to the identification information about the pen is stored in the memory of the electronic device.

According to an embodiment, when the identification information about the pen is stored in the memory (operation 711-Yes), the electronic device may proceed to operation 717.

According to an embodiment, if there is no content stored in the pen (operation 717-No), in operation 718, the electronic device may display the phrase "no content stored". For example, if there is no content stored in the memory of the pen, the electronic device may display a message indicating that there is no stored content.

According to an embodiment, if the content corresponding to the identification information about the pen is not stored in the memory of the electronic device, the electronic device may display a message indicating that there is no stored content.

According to an embodiment, when there is content stored in the pen (operation 717-Yes), in operation 719, the electronic device may identify whether authentication is set in the pen.

According to an embodiment, the electronic device may identify whether authentication information corresponding to the identification information about the pen is stored in the memory of the electronic device.

According to an embodiment, when authentication is set in the pen (719-Yes), in operation 720, the electronic device may provide the authentication screen using the set authentication method. For example, the electronic device may display a pattern input screen, a fingerprint input screen, an iris input screen, a face input screen, and/or a password input screen based on the set authentication method.

According to an embodiment, in operation 721, the electronic device may determine whether authentication is successful. According to an embodiment, the electronic device may identify whether authentication is successful based on the user input entered through the authentication screen.

According to an embodiment, when authentication is successful (operation 721-Yes), in operation 722, the electronic device may provide content.

According to an embodiment, the electronic device may provide content corresponding to the identification information and/or authentication information. For example, the electronic device may receive content stored in the memory of the pen from the pen and provide the received content. According to an embodiment, the electronic device may provide content mapped to the identification information and/or authentication information about the pen and stored in the memory of the electronic device.

According to an embodiment, the electronic device may go through an authentication step whenever a pasting attempt is made using the pen, but when authentication of the pen is already successful, the authentication operation (operation 719, 720, and 721) may be omitted within a set time after authentication is successful.

According to an embodiment, when authentication fails (operation 721-No), the electronic device may proceed to operation 720 and provide the authentication screen again.

According to an embodiment, if authentication is not set in the pen (719-No), the electronic device may proceed to operation 722 to provide content.

Although FIG. 7 illustrates and describes that an authentication operation is performed regardless of the characteristics of the content, according to an embodiment, when the content includes information (e.g., resident registration number, account number, ID, and/or password) that requires security when copying the content on an external electronic device using the pen, the content may be copied as secure content. According to an embodiment, when the content does not include information requiring security, the content may be copied as general content.

According to an embodiment, when the electronic device performs content pasting using the pen, the electronic device may display general content and secure content through a clipboard stored in the pen. According to an embodiment, an object (e.g., lock) indicating that the secure content is secure content other than a thumbnail corresponding to the content may be displayed.

According to an embodiment, if the secure content is selected through the pen, the electronic device may provide the secure content only if authentication is successful through the authentication screen. According to an embodiment, if the general content is selected through the pen, the electronic device may provide content without an authentication operation.

According to an embodiment, the electronic device may provide content corresponding to the identification information about the pen. For example, the electronic device may receive content stored in the memory of the pen from the pen and provide the received content. According to an embodiment, the electronic device may provide content that is mapped to the identification information about the pen and stored in the memory of the electronic device.

FIG. 8A is a view illustrating an operation of copying content using the stylus pen in an external display device according to an embodiment.

Referring to FIG. 8A, the stylus pen 82 (e.g., the electronic device 102 of FIG. 1, the stylus pen 201 of FIG. 2, and the stylus pen 201 of FIG. 3) may communicate with the external display device 81.

According to an embodiment, if the external display device 81 receives an input 812 for selecting a partial area 811 of a displayed screen 810 through the stylus pen 82, the external display device 81 may display an executable menu 820 for the partial area 811. For example, the input 812 for selecting the partial area 811 may be dragging the partial area 811 while pressing a button provided in the stylus pen 82, or holding a touch at one vertex of the partial area 811 for a set time or longer and then dragging and holding a touch at another vertex in the diagonal direction, different from the one vertex of the partial area 811, for a set time or longer.

According to an embodiment, the menu 820 executable for the partial area 811 may include information, cut, copy 821, or delete.

According to an embodiment, if the external display device 81 receives an input for selecting the copy 821 through the stylus pen 82, the image and/or text of the partial area 811 may be stored in the memory of the external display device 81 and/or the memory of the stylus pen 82.

FIG. 8B is a view illustrating an authentication operation and a content paste operation of an electronic device based on an input of a stylus pen according to an embodiment.

Referring to FIG. 8B, after the copy operation illustrated in FIG. 8A, the electronic device 101 (e.g., the electronic device 101 of FIG. 1 or the processor 120 of FIG. 1) may display a UI 832 for executing paste if a first input 831 for pasting is received through the stylus pen 82 on the screen 830 displayed on the display (e.g., the display module 160 of FIG. 1).

For example, the first input 831 for pasting may be touching an area where the copied content is to be pasted while the button of the stylus pen 82 is pressed, or keeping the touch on the area where the copied content is to be pasted for a set time or longer.

According to an embodiment, if an input for selecting the UI 832 for performing pasting through the stylus pen 82 is received, the electronic device 101 may display the authentication screen 840 for authentication if authentication information corresponding to the identification information about the stylus pen 82 is stored.

According to an embodiment, if the second input of the stylus pen 82 is received through the authentication screen 840 and authentication is completed by the second input of the stylus pen 82, the electronic device 101 may display the content 850 copied from the external display device 81 of FIG. 8A.

According to an embodiment, the authentication method is illustrated as a pattern method in FIG. 8B, but is not limited thereto, and a fingerprint recognition, iris recognition, face recognition, and/or password input method may be used according to the authentication method set when pairing the stylus pen 82.

As described above, based on the identification information and/or authentication information about the stylus pen, the electronic device may easily display content copied from another display device.

FIG. 9A is a view illustrating an operation of distinguishing and displaying an input by a plurality of stylus pens of an electronic device for each stylus pen according to an embodiment.

Referring to FIG. 9A, the electronic device 101 (e.g., the electronic device 101 of FIG. 1 or the processor 120 of FIG. 1) may communicate with a plurality of stylus pens 102-1 and 102-2 (e.g., the electronic device 102 of FIG. 1, the stylus pen 201 of FIG. 2, and the stylus pen 201 of FIG. 3).

According to an embodiment, the electronic device 101 may receive inputs 921, 922, 923, 931, 932, and 933 from each of the plurality of stylus pens 102-1 and 102-2 through the display (e.g., the display module 160 of FIG. 1) based on communication with the plurality of stylus pens 102-1 and 102-2 through the communication module (e.g., the communication module 190 of FIG. 1). For example, the electronic device 101 may receive the inputs 921, 922, 923, 931, 932, and 933 from each of the plurality of stylus pens 102-1 and 102-2 on the displayed screen 910.

According to an embodiment, the electronic device 101 may distinguish and display the input received from each of the plurality of stylus pens 102-1 and 102-2, for each of the stylus pens 102-1 and 102-2 based on identification information about each of the plurality of stylus pens 102-1 and 102-2.

According to an embodiment, the electronic device 101 may set different input signal frequencies to the plurality of stylus pens 102-1 and 102-2 and distinguish the respective inputs of the plurality of stylus pens 102-1 and 102-2. For example, the electronic device 101 may set the frequency recognition range of the first stylus pen 102-1 to a first range in a sensing range capable of recognizing the stylus pen, and set the frequency recognition range of the second stylus pen 102-2 to a second range different from the first range in the sensing range capable of recognizing the stylus pen.

According to an embodiment, the plurality of stylus pens 102-1 and 102-2 may adjust the frequency of the radiated signal to be included in the first range or the second range respectively corresponding to the plurality of stylus pens 102-1 and 102-2, or adjust the variable capacitance provided inside the stylus pen to correspond to the frequency recognition range.

According to an embodiment, the electronic device 101 may display the inputs 921, 922, and 923 made by the first stylus pen 102-1 in a thin thickness, and the inputs 931, 932, and 933 made by the second stylus pen 102-2 in a thick thickness. According to an embodiment, the electronic device 101 may set the color and/or type of the pen as well as the thickness of the pen differently for each of the plurality of stylus pens 102-1 and 102-2.

According to an embodiment, the pen setting value different for each of the plurality of stylus pens 102-1 and 102-2 may be set by the pen setting value including the priorities previously stored in the electronic device 101, a user input for each of the plurality of stylus pens 102-1 and 102-2, and/or the pen color, pen thickness, and/or pen type of the stylus pen 102-1, 102-2 set in the external display device.

According to an embodiment, FIG. 9A illustrates that the plurality of stylus pens 102-1 and 102-2 have different pen setting values, but the pen setting values may be the same without distinction between the plurality of stylus pens 102-1 and 102-2.

FIG. 9B is a view illustrating an operation of distinguishing an input by a plurality of stylus pens of an electronic device into different layers for each stylus pen according to an embodiment.

Referring to FIG. 9B, the electronic device may generate an input received from each of the plurality of stylus pens as layers 920 and 930 distinguished for each stylus pen based on identification information about each of the plurality of stylus pens.

For example, the electronic device may generate the displayed screen 910, the input made by the first stylus pen as the first layer 920, and the input made by the second stylus pen as the second layer 930.

According to an embodiment, the electronic device may display only one of the first layer 920 and the second layer 930 based on receiving an input for displaying only one of the first layer 920 and the second layer 930. According to an embodiment, if an input for superposing and displaying the selected layer on the displayed screen 910 is received, the electronic device may superpose and display the selected layer on the displayed screen 910.

According to an embodiment, even when the pen setting values of the first stylus pen and the second stylus pen are not distinguished, the electronic device may generate an input of each stylus pen as each layer based on the identification information about each stylus pen.

FIG. 10A is a view illustrating an operation of displaying a common clipboard of an electronic device according to an embodiment.

Referring to FIG. 10A, the electronic device 101 (e.g., the electronic device 101 of FIG. 1 or the processor 120 of FIG. 1) may display a general clipboard 1020 if an input for selecting the UI 1010 for clipboard display is received while connected to the stylus pen 102 (e.g., the electronic device 102 of FIG. 1, the stylus pen 201 of FIG. 2, and the stylus pen 201 of FIG. 3). According to an embodiment, the general clipboard is irrelevant to the identification information about the stylus pen 102 and may be related to the electronic device 101.

According to an embodiment, when the clipboard corresponding to the stylus pen 102 is stored, the electronic device 101 may display a UI 1011 for displaying the general clipboard and a UI 1012 for displaying a clipboard corresponding to the stylus pen 102.

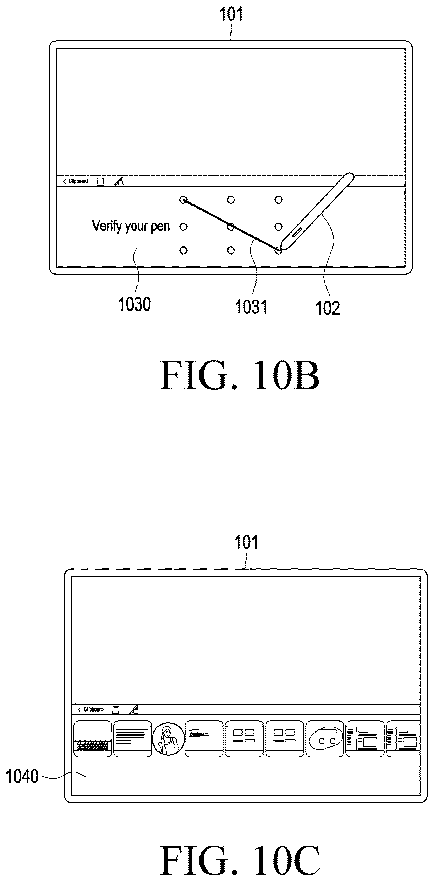

According to an embodiment, if the input for selecting the UI 1012 for displaying the clipboard corresponding to the stylus pen 102 is received, the electronic device 101 may display the authentication screen as illustrated in FIG. 10B if authentication information corresponding to the identification information about the stylus pen 102 is stored.

FIG. 10B is a view illustrating an authentication operation for displaying a clipboard stored in a stylus pen of an electronic device according to an embodiment.

Referring to FIG. 10B, the electronic device 101 may display the authentication screen 1030 when authentication information corresponding to the identification information about the stylus pen 102 is stored. According to an embodiment, the identification information about the stylus pen 102 may be different from the user account registered in the electronic device.

According to an embodiment, the electronic device 101 may receive an input 1031 for authentication of the stylus pen 102 through the authentication screen 1030 and, if the input 1031 for authentication matches the authentication information, a clipboard corresponding to the stylus pen 102 may be displayed as illustrated in FIG. 10C.

According to an embodiment, the authentication method is illustrated as a pattern method in FIG. 10B, but is not limited thereto, and a fingerprint recognition, iris recognition, face recognition, and/or password input method may be used according to the authentication method set when pairing the stylus pen 102.

FIG. 10C is a view illustrating a clipboard stored in a stylus pen displayed when authentication is successful through the authentication screen illustrated in FIG. 10B.

Referring to FIG. 10C, if authentication is successful through the authentication screen 1030 illustrated in FIG. 10B, the electronic device 101 may display a clipboard 1040 corresponding to the stylus pen 102.

According to an embodiment, the electronic device 101 may display a clipboard corresponding to the identification information and/or authentication information about the stylus pen, stored in the memory (e.g., the memory 130 of FIG. 1) and/or a server interworking with the stylus pen 102.

As such, data stored for each stylus pen may be displayed differently on the electronic device communicating with the plurality of stylus pens.

FIG. 11A is a view illustrating a plurality of pieces of authentication information stored in a stylus pen according to an embodiment.

Referring to FIG. 11A, the electronic device 101 (e.g., the electronic device 101 of FIG. 1 or the processor 120 of FIG. 1) may receive identification information (e.g., mac address) from the stylus pen 102 (e.g., the electronic device 102 of FIG. 1, the stylus pen 201 of FIG. 2, and the stylus pen 201 of FIG. 3), and communicate with the stylus pen 102 if the received identification information is mapped to the identification information 1110 stored in the memory (e.g., the memory 130 of FIG. 1).

According to an embodiment, the identification information 1110 of the stylus pen 102 may correspond to a plurality of pieces of authentication information (e.g., key code). According to an embodiment, the plurality of pieces of authentication information may correspond to different users, respectively.

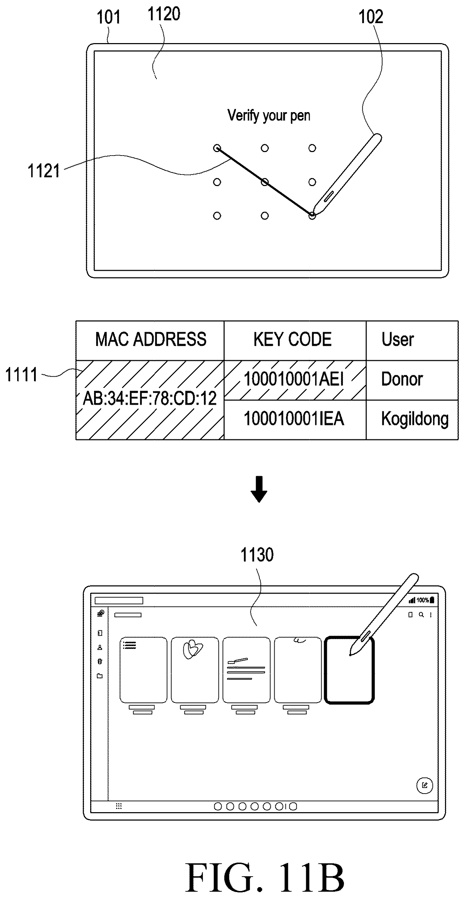

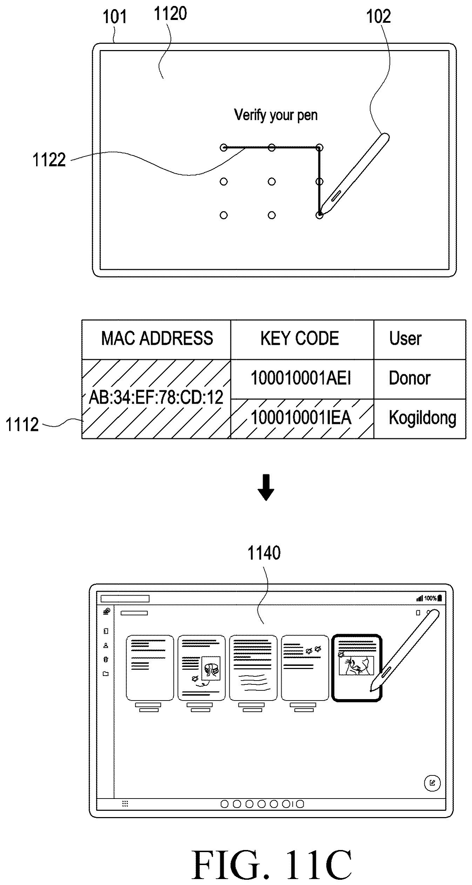

According to an embodiment, if receiving the first input through the stylus pen 102, the electronic device 101 may identify that there is authentication information corresponding to the identification information about the stylus pen 102, and display the authentication screen as illustrated in FIGS. 11B and 11C. For example, the first input may be an input for executing an application (e.g., a note application).

FIG. 11B is a view illustrating an operation of displaying a first content corresponding to first authentication information from among a plurality of pieces of authentication information stored in a stylus pen, of an electronic device according to an embodiment.

Referring to FIG. 11B, the electronic device 101 may display an authentication screen 1120. According to an embodiment, the electronic device 101 may receive a second input 1121 of the stylus pen 102 through the authentication screen 1120.

According to an embodiment, if the second input 1121 of the stylus pen 102 corresponds to the first authentication information 1111 among the plurality of pieces of authentication information corresponding to the identification information, the electronic device 101 may provide the first content 1130 corresponding to the first authentication information 1111. For example, the electronic device 101 may provide a note list 1130 (or clipboard) corresponding to the first authentication information 1111.

FIG. 11C is a view illustrating an operation of displaying a second content corresponding to second authentication information from among a plurality of pieces of authentication information stored in a stylus pen, of an electronic device according to an embodiment.

Referring to FIG. 11C, the electronic device 101 may display an authentication screen 1120. According to an embodiment, the electronic device 101 may receive a second input 1122 of the stylus pen 102 through the authentication screen 1120.

According to an embodiment, if the second input 1122 of the stylus pen 102 corresponds to the second authentication information 1112 among the plurality of pieces of authentication information corresponding to the identification information, the electronic device 101 may provide the second content 1140 corresponding to the second authentication information 1112. For example, the electronic device 101 may provide a note list 1140 (or clipboard) corresponding to the second authentication information 1112.

As described above, the content may be managed for each user through the same stylus pen.

According to an embodiment, an electronic device (e.g., the electronic device 101 of FIG. 1) may comprise a communication module (e.g., the communication module 190 of FIG. 1), memory (e.g., the memory 130 of FIG. 1), a display (e.g., the display module 160 of FIG. 1), and at least one processor (e.g., the processor 120 of FIG. 1) electrically connected to the communication module, the memory, and the display.

According to an embodiment, the at least one processor may receive identification information related to a stylus pen (e.g., the electronic device 102 of FIG. 1, the stylus pen 201 of FIG. 2, and the stylus pen 201 of FIG. 3) from the stylus pen through the communication module.

According to an embodiment, the at least one processor may, in response to a first input of the stylus pen, display an authentication screen for authenticating the stylus pen based on authentication information corresponding to the identification information stored in the memory.

According to an embodiment, the at least one processor may receive a second input of the stylus pen through the authentication screen.

According to an embodiment, the at least one processor may provide content corresponding to the authentication information based on authentication being met based on the authentication information and the second input.

According to an embodiment, the content corresponding to the authentication information may be copied content among at least one content displayed on a display included in an external electronic device, based on a third input of the stylus pen input to the display included in the external electronic device.

According to an embodiment, the at least one processor may, in response to the first input for pasting the copied content to the display of the electronic device, display the authentication screen.

According to an embodiment, the content corresponding to the authentication information may include a clipboard corresponding to the authentication information.

According to an embodiment, the at least one processor may store content related to a third input received by the stylus pen after the authentication is met, in association with the authentication information.

According to an embodiment, the at least one processor may, based on the authentication being not met, store content related to a third input received by the stylus pen after the authentication is not met, in association with the electronic device.

According to an embodiment, the authentication information may be set at a time of initial connection with the stylus pen through the communication module, mapped to the identification information, and stored in the memory.

According to an embodiment, the at least one processor may maintain a pen setting value including at least one of a pen color, a pen thickness, or a pen type of the stylus pen, which is set in an external electronic device before connection with the electronic device, based on at least one of the identification information or the authentication information.

According to an embodiment, the at least one processor may provide first content corresponding to the first authentication information, based on authentication of first authentication information among a plurality of pieces of authentication information corresponding to the identification information being met, based on the second input.

According to an embodiment, the at least one processor may receive an input from each of a plurality of stylus pens through the display based on communication with the plurality of stylus pens through the communication module.

According to an embodiment, the at least one processor may distinguish and display the input received from each of the plurality of stylus pens, for each stylus pen, based on identification information about each of the plurality of stylus pens.

According to an embodiment, the at least one processor may generate the input received from each of the plurality of stylus pens as separate layers distinguished for each stylus pen, based on the identification information about each of the plurality of stylus pens.

According to an embodiment, a method for controlling an electronic device may comprise receiving identification information related to a stylus pen from the stylus pen.

According to an embodiment, the method for controlling the electronic device may comprise, in response to a first input of the stylus pen, displaying an authentication screen for authenticating the stylus pen based on authentication information corresponding to the identification information stored in memory of the electronic device.

According to an embodiment, the method for controlling the electronic device may comprise receiving a second input of the stylus pen through the authentication screen.

According to an embodiment, the method for controlling the electronic device may comprise providing content corresponding to the authentication information based on authentication being met based on the authentication information and the second input.

According to an embodiment, the content corresponding to the authentication information may be copied content among at least one content displayed on a display included in an external electronic device, based on a third input of the stylus pen input to the display included in the external electronic device.

According to an embodiment, displaying the authentication screen may, in response to the first input for pasting the copied content to the display of the electronic device, display the authentication screen.

According to an embodiment, the content corresponding to the authentication information may include a clipboard corresponding to the authentication information.

According to an embodiment, the method for controlling the electronic device may comprise storing content related to a third input received by the stylus pen after the authentication is met, in association with the authentication information.

According to an embodiment, the method for controlling the electronic device may further comprise maintaining a pen setting value including at least one of a pen color, a pen thickness, or a pen type of the stylus pen, which is set in an external electronic device before connection with the electronic device, based on at least one of the identification information or the authentication information.

According to an embodiment, providing the content may provide first content corresponding to the first authentication information, based on authentication of first authentication information among a plurality of pieces of authentication information corresponding to the identification information being met, based on the second input.

According to an embodiment, the method for controlling the electronic device may further comprise receiving an input from each of a plurality of stylus pens through a display of the electronic device based on communication with the plurality of stylus pens.

According to an embodiment, the method for controlling the electronic device may further comprise distinguishing and displaying the input received from each of the plurality of stylus pens, for each stylus pen, based on identification information about each of the plurality of stylus pens.

According to an embodiment, the method for controlling the electronic device may further comprise generating the input received from each of the plurality of stylus pens as separate layers distinguished for each stylus pen, based on the identification information about each of the plurality of stylus pens.

According to an embodiment, in a non-transitory, computer-readable storage medium storing one or more programs, the one or more programs may include instructions causing an electronic device including a communication module, memory, a display, and at least one processor to receive identification information related to a stylus pen from the stylus pen through the communication module.

According to an embodiment, the one or more programs may include instructions causing the electronic device to, in response to a first input of the stylus pen, display an authentication screen for authenticating the stylus pen based on authentication information corresponding to the identification information stored in the memory.

According to an embodiment, the one or more programs may include instructions causing the electronic device to receive a second input of the stylus pen through the authentication screen.

According to an embodiment, the one or more programs may include instructions causing the electronic device to provide content corresponding to the authentication information based on authentication being met based on the authentication information and the second input.

According to an embodiment, the content corresponding to the authentication information may be copied content among at least one content displayed on a display included in an external electronic device, based on a third input of the stylus pen input to the display included in the external electronic device.

According to an embodiment, the one or more programs may include instructions causing the electronic device to, in response to the first input for pasting the copied content to the display of the electronic device, display the authentication screen.

According to an embodiment, the content corresponding to the authentication information may include a clipboard corresponding to the authentication information.

According to an embodiment, the one or more programs may include instructions causing the electronic device to store content related to a third input received by the stylus pen after the authentication is met, in association with the authentication information.

According to an embodiment, the one or more programs may include instructions causing the electronic device to, based on the authentication being not met, store content related to a third input received by the stylus pen after the authentication is not met, in association with the electronic device.

According to an embodiment, the authentication information may be set at a time of initial connection with the stylus pen through the communication module, mapped to the identification information, and stored in the memory.

According to an embodiment, the one or more programs may include instructions causing the electronic device to maintain a pen setting value including at least one of a pen color, a pen thickness, or a pen type of the stylus pen, which is set in an external electronic device before connection with the electronic device, based on at least one of the identification information or the authentication information.

According to an embodiment, the one or more programs may include instructions causing the electronic device to provide first content corresponding to the first authentication information, based on authentication of first authentication information among a plurality of pieces of authentication information corresponding to the identification information being met, based on the second input.

According to an embodiment, the one or more programs may include instructions causing the electronic device to receive an input from each of a plurality of stylus pens through the display based on communication with the plurality of stylus pens through the communication module.

According to an embodiment, the one or more programs may include instructions causing the electronic device to distinguish and display the input received from each of the plurality of stylus pens, for each stylus pen, based on identification information about each of the plurality of stylus pens.

According to an embodiment, the one or more programs may include instructions causing the electronic device to generate the input received from each of the plurality of stylus pens as separate layers distinguished for each stylus pen, based on the identification information about each of the plurality of stylus pens.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication module;
memory;
a display;
a processor; and
memory storing instructions that, when executed by the processor, cause the electronic device to:
receive, through the communication module, identification information related to a stylus pen from the stylus pen;
in response to a first input of the stylus pen, based on authentication information corresponding to the identification information stored in the memory, display an authentication screen for authenticating the stylus pen;
receive, through the authentication screen, a second input of the stylus pen; and
based on authentication being met based on the authentication information and the second input, provide content corresponding to the authentication information.

2. The electronic device of claim 1, wherein the content corresponding to the authentication information is copied content among at least one content displayed on a display included in an external electronic device, based on a third input of the stylus pen input to the display included in the external electronic device, and
wherein the instructions cause the electronic device to, in response to the first input for pasting the copied content to the display of the electronic device, display the authentication screen.

3. The electronic device of claim 1 or 2, wherein the content corresponding to the authentication information includes a clipboard corresponding to the authentication information.

4. The electronic device of any one of claims 1 to 3, wherein the instructions cause the electronic device to store content related to a fourth input received by the stylus pen after the authentication is met, in association with the authentication information.

5. The electronic device of any one of claims 1 to 3, wherein the instructions cause the electronic device to, based on the authentication being not met, store content related to a third input received by the stylus pen after the authentication is not met, in association with the electronic device.

6. The electronic device of any one of claims 1 to 5, wherein the authentication information is set at a time of initial connection with the stylus pen through the communication module, mapped to the identification information, and stored in the memory.

7. The electronic device of any one of claims 1 to 6, wherein the instructions cause the electronic device to maintain a pen setting value including at least one of a pen color, a pen thickness, or a pen type of the stylus pen, which is set in an external electronic device before connection with the electronic device, based on at least one of the identification information or the authentication information.

8. The electronic device of any one of claims 1 to 7, wherein the instructions cause the electronic device to, based on authentication of first authentication information among a plurality of pieces of authentication information corresponding to the identification information being met based on the second input, provide first content corresponding to the first authentication information.

9. The electronic device of any one of claims 1 to 8, wherein the instructions cause the electronic device to, based on communication with the plurality of stylus pens through the communication module, receive an input from each of a plurality of stylus pens through the display.

10. The electronic device of claim 9, wherein the instructions cause the electronic device to, based on identification information about each of the plurality of stylus pens, distinguish and display the input received from each of the plurality of stylus pens, for each stylus pen.

11. The electronic device of claim 9 or 10, wherein the instructions cause the electronic device to, based on the identification information about each of the plurality of stylus pens, generate the input received from each of the plurality of stylus pens as separate layers distinguished for each stylus pen..

12. A method for controlling an electronic device, the method comprising:
receiving identification information related to a stylus pen from the stylus pen;
in response to a first input of the stylus pen, based on authentication information corresponding to the identification information stored in memory of the electronic device, displaying an authentication screen for authenticating the stylus pen;
receiving, through the authentication screen, a second input of the stylus pen; and
based on authentication being met based on the authentication information and the second input, providing content corresponding to the authentication information.

13. The method of claim 12, wherein the content corresponding to the authentication information is copied content among at least one content displayed on a display included in an external electronic device, based on a third input of the stylus pen input to the display included in the external electronic device, and
wherein displaying the authentication screen includes, in response to the first input for pasting the copied content to the display of the electronic device, displaying the authentication screen.

14. The method of claim 12 or 13, wherein the content corresponding to the authentication information includes a clipboard corresponding to the authentication information.

15. The method of any one of claims 12 to 14, further comprising storing content related to a fourth input received by the stylus pen after the authentication is met, in association with the authentication information.
